Europäisches Patentamt

European Patent Office

Office européen des brevets

(11) Publication number: **0 159 865**
A2

# EUROPEAN PATENT APPLICATION

(21) Application number: **85302547.6**

(22) Date of filing: **11.04.85**

(51) Int. Cl.⁴: **E 01 C  9/08,** E 01 C  5/22,
E 04 H  3/18, B 65 G  43/04,
E 01 C  15/00

(30) Priority: **13.04.84  GB 8409642**

(43) Date of publication of application: **30.10.85**
**Bulletin 85/44**

(84) Designated Contracting States: **AT BE CH DE FR IT LI**
**LU NL SE**

(71) Applicant: **Menhennet, John Albert Frederick,**
**69 Longway Avenue Rookery Farm, Whitchurch Bristol,**
**BS14 0DW (GB)**

(72) Inventor: **Menhennet, John Albert Frederick, 69 Longway**
**Avenue Rookery Farm, Whitchurch Bristol, BS14 0DW**
**(GB)**

(74) Representative: **Stuart, Ian Alexander et al, MEWBURN**
**ELLIS & CO. 2/3 Cursitor Street, London EC4A 1BQ (GB)**

(54)  **Non-slip surface.**

(57)  A plate 12 having a non-slip upper surface has a magnetic lower layer 14 so as to be releasably securable to a ferromagnetic structure 10. It is preferably flexible, e.g. having ferrite-loaded PVC for the magnetic layer 14, with an upper layer 18 of polyurethane holding abrasive grit 20. A structure 10 can be rendered ferromagnetic by a coating 26 of an iron-containing resin.

1

## NON-SLIP SURFACE

The present invention relates to the provision of a non-slip surface, particularly though not exclusively for walking on.

Conventionally, a non-slip surface is provided as a permanent feature. It may be provided by application of a non-slip coating (using liquid "paint"), or by attaching pre-formed non-slip plates. Coatings provided by painting are relatively cheap, but do not wear well. Pre-formed plates can be made very durable, but are then correspondingly expensive. Consequently, it is only practicable to install them in a few circumstances.

According to the present invention, there is provided a magnetic plate having a non-slip surface which is exposed when the plate is magnetically attached.

Preferably the plate is flexible, so that it can conform to a non-flat surface. The plate may comprise a flexible layer of a magnetic plastics material (e.g. a polyvinyl chloride-based composition loaded with magnetic particles, e.g. ferrite) provided on its upper surface with a layer of non-slip material which is capable of substantial flexing without cracking. A polyurethane material in which are embedded abrasive particles may be suitable.

In another aspect the invention provides a structure having non-slip cladding on surface portions, the surface portions and the cladding being mutually releasably connected by magnetic attraction. Thus the cladding may comprise at least one magnetic plate and the surface portion may comprise ferromagnetic material. The surface portion may be provided by an intrinsically ferromagnetic element, e.g. a steel structure such as a stairway or a storage tank. Alternatively or additionally use may be made of a ferromagnetic coating.

In a third aspect the invention provides a method of providing a non-slip surface which comprises magnetically attaching to a first surface a magnetic plate having a non-slip outer surface. There may be a preliminary step of at least enhancing the magnet-holding power of the first surface by applying ferromagnetic means thereto. This may be effected by applying a ferromagnetic layer, e.g. using a resin loaded with iron particles.

In a fourth aspect the invention provides a method of making a magnetic plate. This may comprise providing a base layer of magnetic plastics material; applying a settable plastics resin composition to the upper surface thereof; applying grit to the resin composition before it is fully set; and allowing it to set. A further coating may be applied to bind the grit. Of course this should not be so thick as to bury the grit completely.

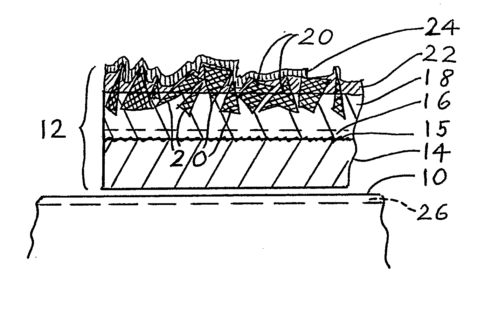

A preferred embodiment of the invention will now be described in greater detail by way of example, with reference to the accompanying drawing.

The sole figure of the drawing is a schematic section through a clad surface embodying the invention.

A ferromagnetic surface 10 (e.g. a steel plate) bears a magnetic plate 12. This plate was produced from commercially available magnetic polyvinyl chloride sheeting such as is supplied by Magnetic Developments Ltd. (Swindon, England). This sheeting has a thickness of 1.5mm. The magnetic strength is such that, when placed on a ferromagnetic surface, it adheres with a force of $85g/cm^2$. A non-slip facing layer was applied to a rectangular portion 14 of this sheeting as follows. The top surface 15 was abraded using a belt sander. This was then treated with a xylene-based moisture-cured polyurethane, to provide a primer coat 16. The abrasion of the PVC surface allows the xylene to attack it sufficiently to ensure that the primer coat is firmly bonded. After the primer coat had been allowed to cure, another coat 18 of the polyurethane was applied. When this was still wet, a non-slip grit 20 of bauxite and copper slag was sprinkled over it. Once the second layer had cured and gripped the grit, a third layer 22 of polyurethane was applied to bind in the granules of grit. Finally, a yellow polyurethane paint or varnish 24 was applied in spaced yellow stripes.

Much care has gone into the coating, so that it

4

should not seriously impair the flexibility of the magnetic PVC material. The coating described has excellent flexibility, and practically no tendency to crack even when the plate is bent quite sharply. Thus the plate can be applied to a curved surface. The particular example described is suitable for cladding pipes down to 6 inch (15cm) diameter. The coating is tough enough to hold the slip-resistant grit in place, and to give the plate a long slip-resistant lifetime.

For use, packs of plates may be kept in store. When it is necessary to provide safe treads, e.g. for inspection or maintainance work on a steel storage tank, a pack of plates can be taken and easily put in place. They are very conspicuous owing to the yellow stripes. Although it is the work of only seconds to install a series of plates, once in contact with a ferrous metal surface, they hold on very firmly with respect to lateral sliding. Indeed, it is practically impossible to make a plate slide. Nevertheless, when the job has been completed, it is extremely easy to pick them all up again and return them to store.

Not only does this manner of working mean that a comparatively small number of plates can provide non-slip walkways for a large industrial complex, but the fact that plates need only be in position when required means that they need not be left in hostile environments unnecessarily.

The plates adhere perfectly well under water or other liquids, and are thus very suitable for providing non-slip treads inside storage tanks or on metal steps in swimming pools.

If it is desired to apply the plates 12 to a non-attractable surface, this must first be rendered attractable, e.g. by applying a layer 26 by ferromagnetic resin. This may be prepared by adding iron powder to a conventional coating resin. A suitable epoxy resin (available from Shell UK Ltd.) is a 2-part composition of base resin and hardener. These are mixed (2:1 by weight) and then micronised iron particles (50% of the weight of the 2-part composition) are mixed in. The mixture is then spread over the surface and allowed to cure. For example, the concrete floor of an aircraft hangar or workshop can be coated. Magnetic plates 12 can then be temporarily laid wherever work is in progress.

Although the invention has been exemplified in connection with surfaces for walking on, it is not limited thereto. For example, large rotary drums for driving conveyor belts have non-slip rubber coatings, which have periodically to be laboriously stripped off and replaced. An array of magnetic plates 12 can be applied and removed easily, and a damaged area can be replaced without affecting the rest.

0159865

6

<u>CLAIMS</u>:

1. A plate (12) having a non-slip surface (20,22,24) which is exposed in use, characterised in that the plate is magnetic (14).

2. A plate according to claim 1 which is flexible.

3. A plate according to claim 2 which comprises a flexible layer of a magnetic plastics material (14) provided on its upper surface with a layer of non-slip material (16,18) which is capable of substantial flexing without cracking.

4. A plate according to claim 3 wherein the magnetic plastics material (14) comprises a polyvinyl chloride-based composition loaded with magnetic particles, and the non-slip material layer comprises a polyurethane material (18) in which are embedded abrasive particles (20).

5. A method of making a plate (12) with a non-slip surface which comprises applying grit (20) to a settable resin composition (18) before it is fully set; and allowing it to set; characterised in that the method comprises providing a base layer (14) of magnetic plastics material; and applying said plastics resin composition (18) to the upper surface (15) thereof.

6. A method according to claim 5 wherein a further coating (22) of resin composition is applied after the grit (20) to bind it.

7

7. A structure (10) having a non-slip cladding (12) on surface portions, the surface portions and the cladding being mutually releasably connected by magnetic attraction.

8. A structure according to claim 7 wherein the surface portions are provided by a ferromagnetic coating (26).

9. A method of providing a non-slip surface which comprises at least enhancing the magnet-holding power of a surface (10) by applying ferromagnetic means (26) thereto, and then magnetically attaching to said surface (10) a magnetic plate (12) having a non-slip outer surface (20,22,24).

10. A method according to claim 9 wherein said application of ferromagnetic means comprises the application of a ferromagnetic layer (26) comprising a resin composition containing ferromagnetic particles.